# FASCICULE DE BREVET EUROPEEN

(11) **EP 1 659 005 B1**
(45) Date de publication et mention de la délivrance du brevet: **23.01.2008**
(21) Numéro de dépôt: 05110379.4
(22) Date de dépôt: 04.11.2005
(51) Int. Cl.: B60C 19/08

(54) **Gomme conductrice localisée**
Elektrisch leitender Gummistreifen
Electric conductive rubber stripe

(30) Priorité: 18.11.2004 FR 0412281
(43) Date de publication de la demande: 24.05.2006
(73) Titulaire: Société de Technologie Michelin, 63000 Clermont-Ferrand (FR); Michelin Recherche et Technique S.A., 1763 Granges-Paccot (CH)
(72) Inventeur: Nicolas, Serge, 63100 Clermont-Ferrand (FR)
(74) Mandataire: Diernaz, Christian

(56) Documents cités:
- EP-A- 0 847 880
- WO-A-98/38050
- DE-A1- 4 417 914
- FR-A- 1 198 271

## Description

Le domaine de l'invention concerne les pneumatiques destinés à être montés sur des véhicules de transport. Plus particulièrement, l'invention traite du problème de l'écoulement des charges électriques dans des pneumatiques réalisés avec des mélanges caoutchouteux très faiblement conducteurs de l'électricité.

Dans le but d'améliorer la résistance au roulement et de réduire la consommation de carburant, les pneumatiques modernes comportent des mélanges comprenant à titre de charge majoritaire des charges non conductrices de l'électricité telles que la silice ou encore des mélanges faiblement chargés en noir de carbone.

L'usage de ces mélanges s'est ainsi largement développé pour la réalisation de bandes de roulement compte tenu des avantages procurés par de tels mélanges pour améliorer également les performances relatives à l'adhérence sur sol sec, humide ou verglacé, la résistance à l'usure ou encore le bruit de roulement. Ce type de pneumatique est décrit à titre illustratif dans la demande de brevet européen EP-B-501 227.

Toutefois la mise en oeuvre de ces mélanges s'est accompagnée d'une difficulté liée à l'accumulation d'électricité statique lors du roulage du véhicule, et à l'absence d'écoulement de ces charges vers le sol en raison de la très grande résistivité des mélanges constituant ladite bande de roulement. L'électricité statique ainsi accumulée dans un pneumatique est susceptible de provoquer, lorsque certaines conditions particulières sont réunies, un désagréable choc électrique à l'occupant d'un véhicule, lorsqu'il est amené à toucher la carrosserie du véhicule. Cette électricité statique est, en outre, susceptible de hâter le vieillissement du pneumatique en raison de l'ozone générée par la décharge électrique. Elle peut également être à l'origine, en fonction de la nature du sol et du véhicule, d'un mauvais fonctionnement de la radio embarquée dans le véhicule en raison des interférences qu'elle génère.

C'est la raison pour laquelle de nombreuses solutions ont été proposées pour permettre l'écoulement des charges depuis le bloc sommet vers le sol.

La demande de brevet US-A-5 518 055 décrit un pneumatique dont la bande de roulement, réalisée à partir d'un mélange très faiblement conducteur, est enduite d'une fine couche de mélange conducteur. Cette couche est en contact avec les mélanges de flanc eux-mêmes également conducteurs de l'électricité afin de permettre l'écoulement des charges électriques.

Une autre solution est exposée dans la demande EP-A-0 658 452 qui décrit l'adjonction d'une bande de mélange ou insert, réalisé avec un mélange caoutchouteux conducteur, s'étendant radialement préférentiellement sur toute la circonférence du pneumatique, et reliant la surface externe de la bande de roulement soit à l'une des nappes de sommet, soit à l'armature de carcasse, soit à tout autre partie attenante à la bande de roulement du pneumatique suffisamment conductrice d'électricité, la nécessaire conductivité électrique étant conférée par la présence d'un noir de carbone adapté.

De nombreux perfectionnements ont été apportés à ce principe selon que la bande de roulement comporte une ou plusieurs couches de matériaux conducteurs ou très faiblement conducteurs et sont exposées à titre d'exemple dans les brevets EP-B-0 925 903 ou dans le brevet EP-B-0 963 302. Le document DE-A-44 17 014 prévoit quant à lui de disposer un tissé métallique entre la zone sommet et la tringle, ledit tissé étant lui-même relié à la surface externe par des conducteurs métalliques traversant les matériaux de la zone sommet et de la zone basse. On considèrera néanmoins que cette solution est peu robuste en regard par rapport aux problèmes bien connus par ailleurs d'oxydation, en raison du chemin privilégié que constituent ces conducteurs entre les parties externes et les éléments de renfort internes du pneumatique comme la nappe de renfort carcasse, les nappes de ceinture sommet ou la trigle.

Cependant, toutes ces méthodes ont pour objet de relier la surface externe de la bande de roulement avec une partie de la zone interne du sommet du pneumatique qui lui est juste adjacente, telle que le flanc, une nappe de renfort sommet ou de renfort carcasse, et qui présente des propriétés de conduction de l'électricité. Les charges électriques sont donc évacuées vers le sol depuis la jante, reliée au véhicule, et passent au travers de la zone basse qui est en contact avec la jante, puis en cheminent par les flancs au travers des mélanges constitutifs de la nappe de renfort carcasse ou des gommes de protection des flancs en direction d'une partie interne de la zone sommet, et enfin s'écoulent de la partie interne de la zone sommet vers le sol en passant par l'armature sommet et par la bande de roulement.

Toutefois, les développements récents des pneumatiques dans le but d'améliorer la résistance au roulement, conduisent à utiliser des mélanges à base de silice, ou très faiblement chargés en carbone, dans la plupart des composants formant le pneumatique et susceptibles d'effectuer un travail mécanique pendant l'usage du pneumatique. Un pneumatique de ce type est décrit à titre d'exemple dans la publication EP-A-0847 880. Il peut en être ainsi des mélanges utilisés pour la réalisation des bandes de roulement, des flancs, des nappes de renfort carcasse ou encore des nappes d'armature sommet, des profilés de renfort sommet, ainsi que des profilés de renfort du bourrelet, et de la gomme d'étanchéité intérieure. Tous ces matériaux se caractérisent en ce qu'ils sont donc très faiblement conducteurs de l'électricité.

Seuls les éléments du pneumatique tels que l'anneau de renforcement du bourrelet, ou les gommes de protection du bourrelet qui ont pour fonction d'assurer le contact entre la jante et la zone basse de l'enveloppe qui sont réalisés avec des mélanges contenant une charge à base de carbone, présentent encore la propriété de conduire l'électricité.

L'invention a pour objet de fournir une solution à la conduction des charges électriques dans des pneumatiques essentiellement réalisés à partir de mélanges très faiblement conducteurs de l'électricité.

Toutefois, comme on le verra par la suite, l'invention peut concerner tout autant les bandages pneumatiques enfermant un volume d'air sous pression pour porter la charge, que les bandages dits non pneumatiques formés d'un ou plusieurs éléments autoporteurs et tels que décrits à titre d'exemple dans le brevet EP-A-1 056 604

On entend par matériau très faiblement conducteur de l'électricité un matériau présentant une résistivité supérieure ou égale à 10⁸ Ohms/cm. De même on entend par matériau conducteur de l'électricité un matériau présentant une résistivité inférieure à 10⁶ Ohms/cm. Ces matériaux ont les propriétés élastiques appropriées et peuvent être de nature caoutchoutique ou pas.

Ainsi à titre général, l'invention peut s'appliquer à un pneumatique destiné à être monté sur une roue elle-même conductrice de l'électricité et conçu pour porter une charge, pneumatique constitué
- d'une zone sommet (S) présentant une surface extérieure destinée à venir en contact avec le sol et comprenant des moyens pour assurer la conduction de l'électricité entre le sol et une partie interne de la zone sommet,
- d'une zone basse (B) destinée à assurer le contact entre la roue et le pneumatique et dont le constituant (5) en contact avec la roue est conducteur de l'électricité,
- et d'une zone flanc (F) destinée à assurer la liaison entre la zone sommet (S) et la zone basse (B).

Ce bandage se caractérise en ce que :
- les constituants de la zone flanc (F) sont réalisés avec des matériaux très faiblement conducteurs de l'électricité,
- le bandage comprend au moins une bande conductrice (8), de faible épaisseur et de faible largeur, réalisée avec un matériau de nature caoutchoutique conducteur de l'électricité et disposée radialement sur un trajet allant de ladite partie interne de la zone sommet (S) avec laquelle elle est en contact, jusqu'à la zone basse (B) où elle est en contact avec ledit constituant (5) en contact avec la roue.

Dans ce qui suit on se réfèrera à l'application de l'invention à un bandage de type pneumatique dans lequel la zone sommet (S) comprend une armature sommet circonférentielle constituée d'au moins une nappe de renfort sommet, et une bande de roulement disposée circonférentiellement autour de l'armature sommet dont la surface extérieure est en contact avec le sol, ladite zone sommet étant solidaire d'une nappe de renfort carcasse ancrée à ses deux extrémités à la zone basse (B), ladite zone basse comprenant une gomme de protection du bourrelet destinée à assurer le contact avec la roue et réalisée avec un matériau conducteur de l'électricité. La zone flanc peut comprendre, outre la nappe de renfort carcasse un profilé assurant la protection de l'enveloppe contre les chocs transversaux.

Les mélanges utilisés pour la réalisation des gommes de protection des flancs et des nappes de renfort de la carcasse sont très faiblement conducteurs de l'électricité. Dans ces conditions il n'y a pas de chemin conducteur de l'électricité entre la zone sommet S et la zone basse B dans la mesure où par ailleurs la nappe de renfort carcasse constitue un isolant avec les constituants situés radialement en dessous, tels que la gomme d'étanchéité par exemple.

Les mélanges utilisés pour la réalisation de la bande de roulement ou de l'armature sommet peuvent indifféremment être conducteur ou très faiblement conducteurs de l'électricité. Dans ce dernier cas le pneumatique comprend un moyen, connu de l'art antérieur, permettant d'assurer l'écoulement des charges électriques depuis la surface externe de la bande de roulement vers la surface radialement interne de cette dernière. L'écoulement des charges depuis la partie interne de la zone sommet vers le sol peut se faire au travers de la bande » de roulement seulement ou au travers de l'armature sommet et de la bande de roulement.

Les mélanges utilisés pour la réalisation des gommes de protection du bourrelet sont conducteurs de l'électricité.

Une bande conductrice, de faible épaisseur et de faible largeur, réalisée avec un matériau préférentiellement de nature caoutchoutique et conducteur de l'électricité est disposée radialement sur un trajet allant de ladite partie interne de la zone sommet S avec laquelle elle est en contact, jusqu'à la zone basse B où elle est en contact avec le constituant en contact avec la roue.

Selon que les mélanges utilisés pour la réalisation de l'armature sommet sont conducteurs ou non de l'électricité l'extrémité de la bande conductrice en contact avec la partie interne de la zone sommet sera placée radialement au dessus ou au dessous de l'armature sommet de manière à assurer l'écoulement des charges entre l'extrémité de la bande et le sol en passant soit au travers de l'ensemble formé par l'armature sommet et la bande de roulement soit en passant directement au travers de la bande de roulement cette dernière pouvant être munie ou non d'un insert posé radialement entre la surface de la bande de roulement et la partie interne, selon la nature du mélange de ladite bande de roulement.

L'intérêt et la nature de l'invention apparaîtront plus clairement à la lecture d'un exemple de mise en ouvre et des figures dans lesquelles :
- la figure 1 représente la demi coupe radiale d'un pneumatique dans lequel seuls les mélanges de la gomme de protection bourrelet et de l'insert sont conducteurs de l'électricité,
- la figure 2 représente la demi coupe radiale d'un pneumatique comparable à celui de la figure 1 et comportant une première variante de réalisation de la bande conductrice,
- la figure 3 représente la demi coupe radiale d'un pneumatique comparable à celui de la figure 1 et comportant une deuxième variante de réalisation de la bande conductrice,
- la figure 4 représente la demi coupe radiale d'un pneumatique comparable à celui de la figure 1 et comportant une troisième variante de réalisation de la bande conductrice,
- la figure 5 représente la demi coupe radiale d'un pneumatique dans lequel l'armature sommet et la bande de roulement sont réalisées avec des mélanges conducteurs de l'électricité.
- la figure 6 représente la demi coupe radiale d'un pneumatique dans lequel l'armature sommet est réalisée avec des mélanges conducteurs de l'électricité, et la bande de roulement est réalisée avec des mélanges très faiblement conducteurs de l'électricité.
- la figure 7 représente la demi coupe radiale d'un pneumatique dans lequel la bande de roulement et l'armature sommet sont réalisées avec des mélanges très faiblement conducteurs de l'électricité et dans lequel la sous couche est réalisée avec un mélange conducteur de l'électricité,

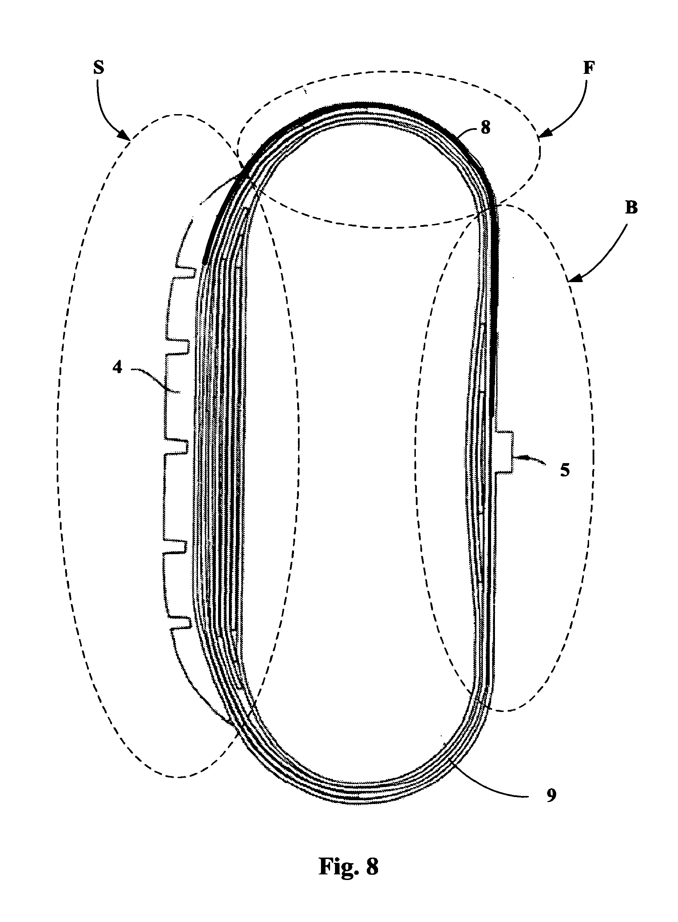

- La figure 8 représente une coupe radiale d'un bandage non pneumatique réalisé avec des éléments autoporteurs non conducteurs de l'électricité.

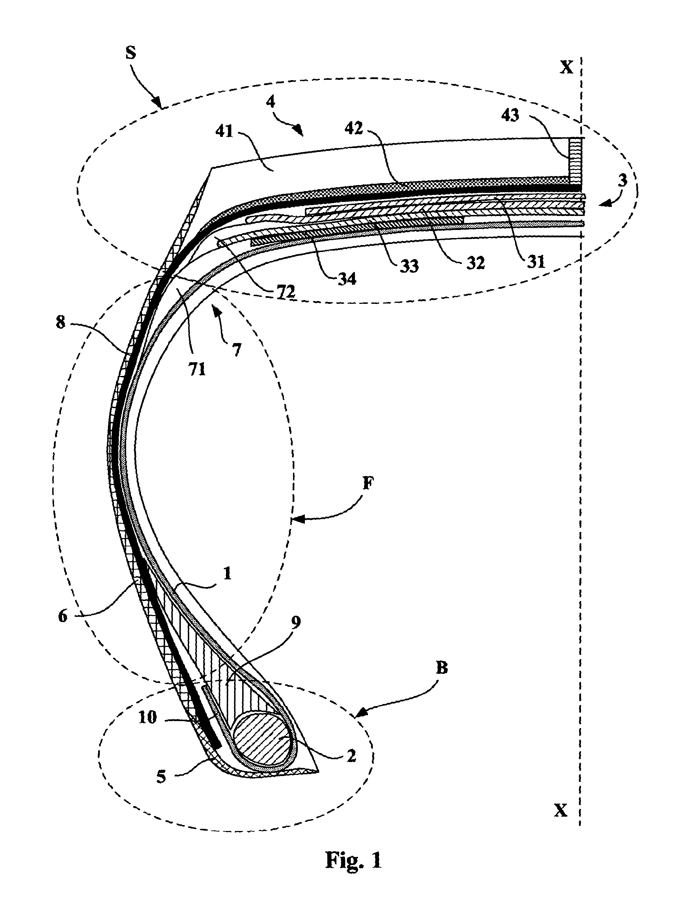

Le pneumatique de la figure 1 comprend une nappe carcasse 1 ancrée par le retournement 10 de ses deux extrémités autour des anneaux de renfort du bourrelet 2. Une gomme 6 assure la protection des flancs. Une armature sommet 3 est constituée de plusieurs nappes de renfort sommet circonférentiel 31, 32, 33, 34, disposées radialement les unes sur les autres. Une bande de roulement 4 comprend une couche d'usure 41 et une sous-couche 42. Etant formées de matériaux très faiblement conducteurs de l'électricité, la bande de roulement et la sous-couche sont traversées radialement sur toute leur circonférence par un insert 43 conducteur de l'électricité. Des profilés de renfort du sommet 7 sont disposés aux extrémités axiales des nappes de l'armature sommet pour soutenir (71) ou pour découpler (72) lesdites extrémités de ces nappes. Un profilé 9 assure le remplissage de la zone basse. La gomme de protection du bourrelet 5 établit le contact entre la zone basse et la jante.

Des tracés en pointillés entourent respectivement la zone sommet S la zone basse B et la zone flanc F.

Dans cet exemple, seuls les mélanges utilisés pour la réalisation de la gomme de protection du bourrelet 5 et de l'insert 43 sont conducteurs de l'électricité. Les charges électriques ne peuvent donc pas s'écouler librement entre la zone sommet S et la zone basse B.

La bande conductrice 8 est alors disposée radialement entre la gomme de protection du flanc et l'armature de carcasse pour assurer la conduction des charges électriques entre la zone sommet et la zone basse de telle manière qu'une de ses extrémités soit en contact avec la gomme de protection du bourrelet 5 et que son autre extrémité soit en contact avec la partie de l'insert 43 débouchant sur la surface radialement interne de la bande de roulement et correspondant à la partie de la bande de roulement située radialement la plus proche de l'axe de rotation du pneumatique.

La bande conductrice 8 de faible largeur et de faible épaisseur est réalisée à partir d'un mélange conducteur de l'électricité. La largeur de la bande peut aller de quelques millimètres jusqu'à deux ou trois centimètres et est adaptée au mode de réalisation et à la mise en oeuvre de ladite bande. Ce qui n'exclut pas la réalisation de bande de largeurs inférieures ou supérieures. L'épaisseur peut également, et de manière non limitative, être comprise entre un ou deux dixièmes de millimètre et un, voire deux millimètres. Là encore les limites sont données par le procédé de réalisation et de mise en oeuvre.

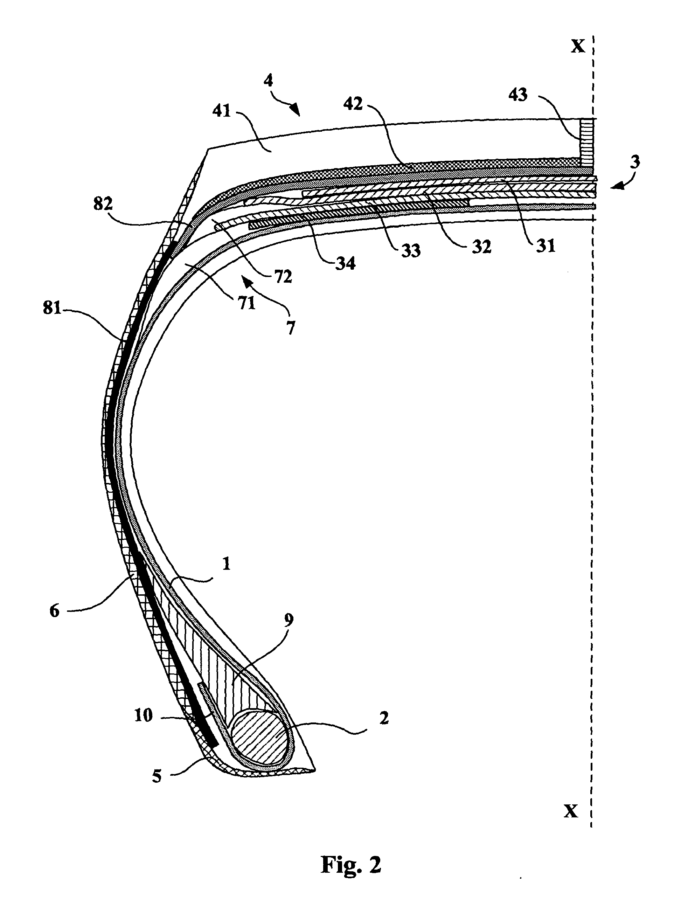

Le mode de réalisation illustré sur la figure 2, comprend une première bande conductrice 81 disposée sous la bande de protection du flanc et venant par une de ses extrémités en contact avec la surface intérieure de la gomme de protection du bourrelet 5. Une deuxième bande conductrice 82 est disposée sous la bande de roulement de telle manière qu'une de ses extrémités soit en contact avec la partie de l'insert 43 débouchant sur la surface radialement interne de la bande de roulement 4, 41, 42. Les deux extrémités libres des bandes conductrices 81 et 82 sont mises en contact lors de l'assemblage du sommet sur la carcasse après que ladite carcasse ait été conformée depuis une forme généralement cylindrique vers une forme toroïdale.

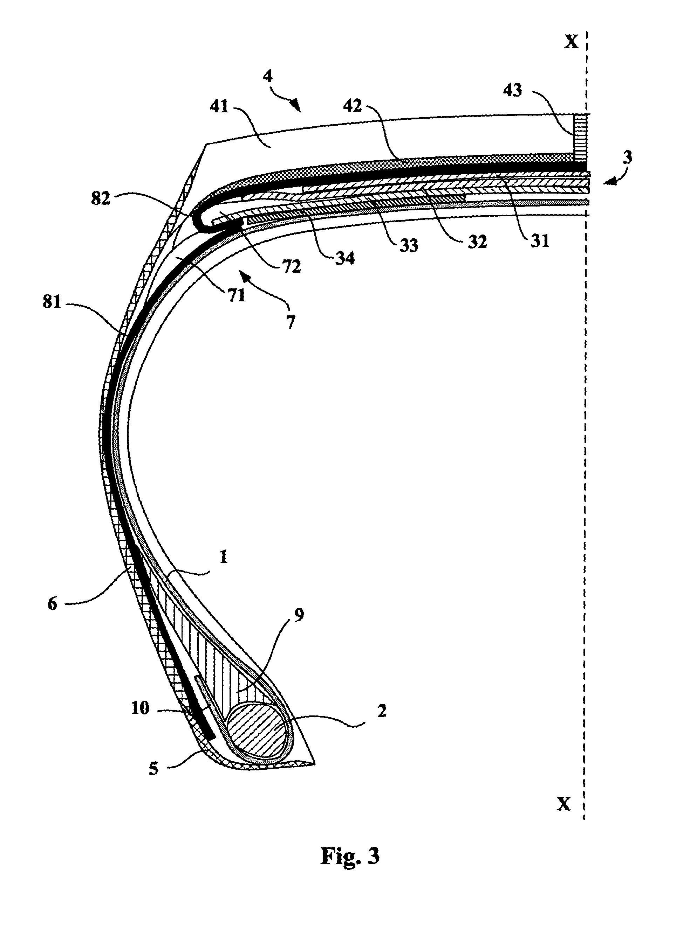

Le mode de réalisation illustré sur la figure 3 consiste à déposer une première bande conductrice 81 sur la nappe de renfort carcasse et à retourner la bande conductrice 82 dont une des extrémités est en contact avec la partie de l'insert 43 débouchant sur la surface radialement interne de la bande de roulement 4, autour de l'armature sommet 3, de manière à ce que cette extrémité soit en contact avec l'extrémité de la bande conductrice 81 préalablement déposée sur la nappe de renfort carcasse 1.

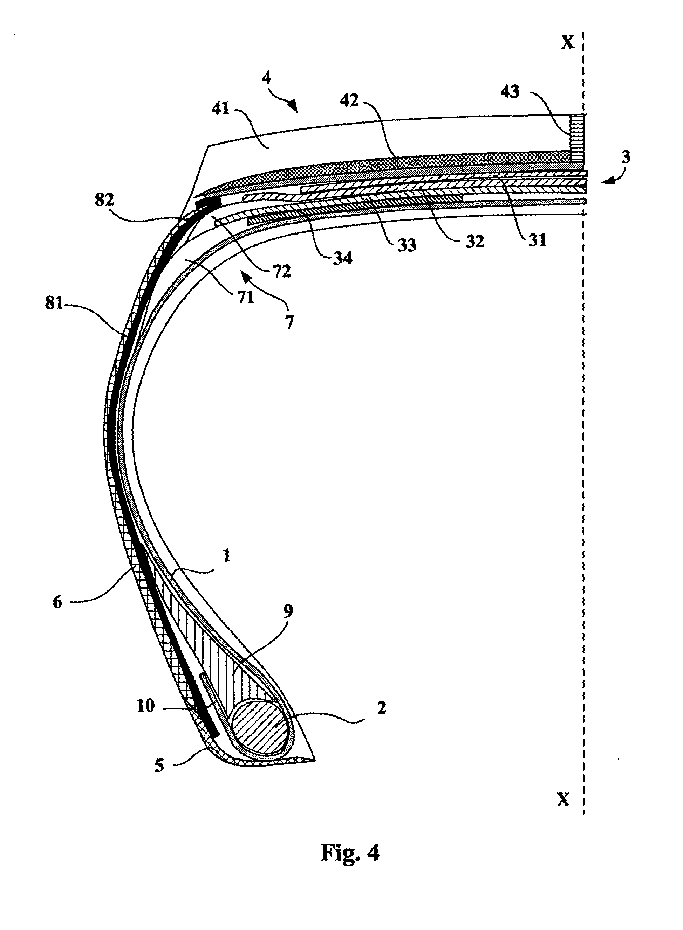

Dans le cas où l'extrémité des flancs 6 est disposée sous l'aile latérale de la bande de roulement 4, il est possible de retourner la bande conductrice 81, dont une des extrémités est en contact avec la gomme de renfort du bourrelet 5, autour de l'extrémité radialement extérieure de la gomme de protection flanc, de manière à ce que l'extrémité de la bande 81 soit en contact avec l'extrémité de la bande conductrice 82 disposée sous la bande de roulement et dont l'autre extrémité est en contact avec la partie de l'insert 43 débouchant sur la surface radialement interne de la bande de roulement, tel que cela est illustré sur la figure 4.

Tous ces modes de réalisation nécessitent que l'assemblage du sommet et de la carcasse conformée se fasse avec la précision circonférentielle permettant la mise en contact des extrémités des bandes conductrices 81 et 82.

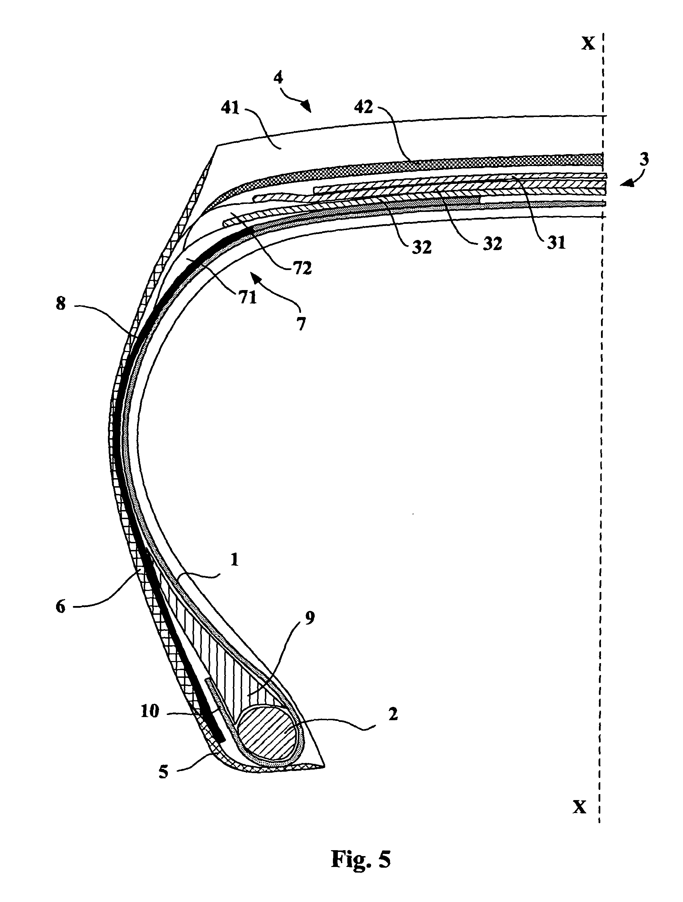

Lorsque les mélanges constituant la bande de roulement 4 et l'armature sommet 3 sont conducteurs de l'électricité, il suffit que l'extrémité de la bande conductrice soit en contact avec la partie radialement interne de l'armature sommet 3, tel que cela est illustré sur la figure 5. L'écoulement des charges se fait depuis l'extrémité de la bande conductrice 8 en contact avec la partie radialement interne de l'armature sommet, directement au travers de l'armature sommet 3 et de la bande de roulement 4.

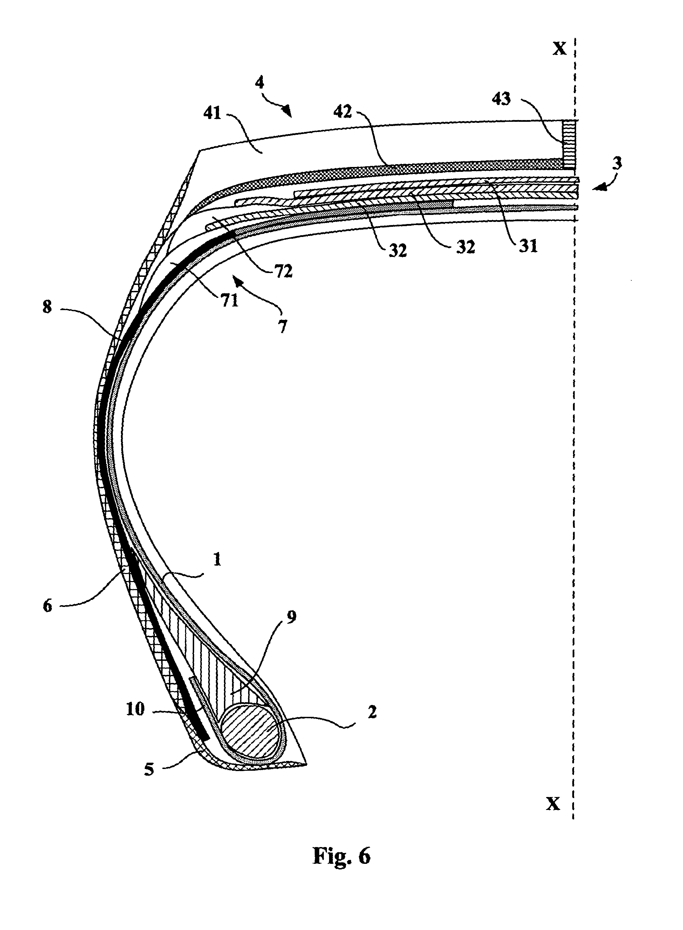

Une configuration analogue, illustrée sur la figure 6, est suffisante lorsque la bande de roulement 4 est constituée de mélanges très faiblement conducteurs de l'électricité mais que ladite bande de roulement 4 comporte un insert circonférentiel 43, réalisé avec un mélange conducteur de l'électricité, et que ledit insert est disposé radialement sur toute l'épaisseur de ladite bande de roulement 4, et vient en contact avec la partie radialement externe de l'armature sommet 3. L'écoulement des charges électriques se fait alors au travers de l'armature sommet 3 et de l'insert 43.

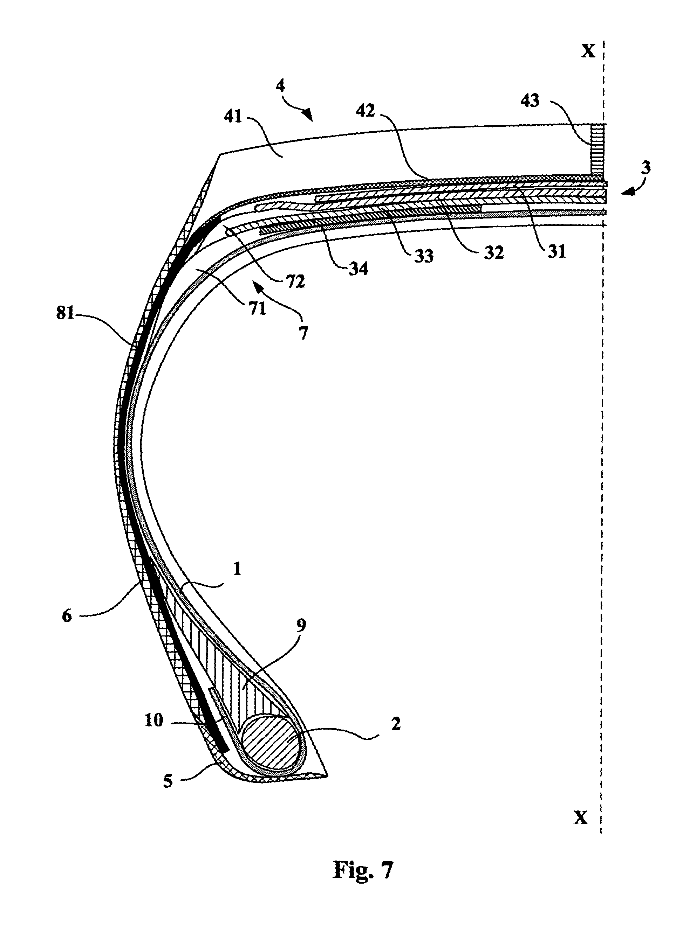

Une dernière configuration illustrée à la figure 7 représente le cas d'un pneumatique dans lequel la bande de roulement 41 et l'armature sommet 3 sont réalisées avec des mélanges très faiblement conducteurs de l'électricité et dans lequel la sous couche 42 est réalisée avec un mélange conducteur de l'électricité. La bande de roulement comprend donc un insert 43 pour permettre l'écoulement des charges électriques entre le sol et la sous-couche 42.

Dans ces conditions il suffit pour assurer l'écoulement des charges électriques que la bande conductrice 81 soit en contact à une de ses extrémités avec la sous couche 42 et que son autre extrémité soit en contact avec la surface intérieure de la gomme de protection du bourrelet 5.

Cette dernière solution présente un intérêt particulier pour sa mise en oeuvre dés lors qu'il n'est pas nécessaire de prendre de précautions particulières pour orienter circonférentiellement le bloc sommet par rapport à la carcasse conformée.. Par ailleurs, la sous-couche 42 peut être constituée par une simple gomme de liaison de seulement quelques dixièmes de millimètres d'épaisseur et présenter toutes les performances de conductivité désirée.

La pose de la bande conductrice 8, 81, 82 peut se faire indifféremment sur un coté ou l'autre du pneumatique voire sur les deux cotés.

De même il est tout à fait possible de réaliser un chemin conducteur de l'électricité semblable à ceux décrits précédemment et équivalent à la dépose d'une bande conductrice, en projetant sur le trajet désiré une dissolution caoutchoutique constituée à partir d'un mélange conducteur de l'électricité. Cette fine couche de dissolution présente les mêmes caractères conducteurs de l'électricité qu'une bande conductrice de faible épaisseur et peut etre déposé à l'aide, par exemple d'un pulvérisateur ou d'un pinceau.

Les modes de réalisations qui précèdent ont pour objet de mettre en évidence des modes particuliers de mise en oeuvre de l'invention ainsi que les adaptations possibles aux différents modes de réalisation des pneumatiques les plus courants. Ainsi, sans se départir de l'esprit de ladite invention l'homme du métier n'aura pas de difficultés à trouver les adaptations nécessaires à des modes de réalisations plus particuliers.

Ainsi, tout en restant dans l'esprit de l'invention il est possible de rendre conducteur un bandage non pneumatique constitué d'éléments autoporteurs très faiblement conducteurs de l'électricité tels que représenté sur la figure 6, en disposant une bande 8 formée d'un matériau conducteur entre la partie du sommet S portant la bande de roulement 4 et la zone basse où est disposé un moyen 5 d'accrochage du bandage sur la roue, ledit moyen étant conducteur de l'électricité.

## Revendications

1. Bandage destiné à être monté sur une roue et à porter une charge, constitué
- d'une zone sommet (S) présentant une surface extérieure destinée à venir en contact avec le sol et comprenant des moyens pour assurer la conduction de l'électricité entre le sol et une partie interne de la zone sommet,
- d'une zone basse (B) destinée à assurer le contact entre la roue et le pneumatique et dont le constituant (5) en contact avec la roue est conducteur de l'électricité,
- et d'une zone flanc (F) destinée à assurer la liaison entre la zone sommet (S) et la zone basse (B),
**caractérisé en ce que** :
- les constituants de la zone flanc (F) sont réalisés avec des matériaux très faiblement conducteurs de l'électricité,
- le bandage comprend au moins une bande conductrice (8), de faible épaisseur et de faible largeur, réalisée avec un matériau de nature caoutchoutique conducteur de l'électricité et disposée radialement sur un trajet allant de ladite partie interne de la zone sommet (S) avec laquelle elle est en contact, jusqu'à la zone basse (B) où elle est en contact avec ledit constituant (5) destiné à être en contact avec la roue.

2. Bandage selon la revendication 1 dans lequel la zone sommet (S) comprend une armature sommet circonférentielle (3, 31, 32, 33, 34) constituée d'au moins une nappe de renfort sommet, et une bande de roulement (4, 41, 42) disposée circonférentiellement autour de l'armature sommet dont la surface extérieure est en contact avec le sol, ladite zone sommet étant solidaire d'une nappe de renfort carcasse (1) ancrée à ses deux extrémités à la zone basse (B), ladite zone basse comprenant une gomme de protection du bourrelet (5) destinée à assurer le contact avec la roue et réalisée avec un matériau conducteur de l'électricité, de manière à former un bandage pneumatique.

3. Bandage pneumatique selon la revendication 2 dans lequel la bande de roulement (4, 41, 42) est conductrice de l'électricité, dans lequel les éléments constituant l'armature sommet (3, 31, 32, 33, 34) sont très faiblement conducteurs de l'électricité, et dans lequel la bande conductrice (8) est en contact avec la surface radialement interne de la bande de roulement.

4. Bandage pneumatique selon la revendication 2 dans lequel la bande de roulement (4, 41, 42) est non conductrice de l'électricité et comprend un insert (43) réalisé à partir d'un mélange conducteur de l'électricité et s'étendant radialement à travers toute l'épaisseur de la bande de roulement (4), dans lequel les éléments constituants l'armature sommet (3, 31, 32, 33, 34) sont très faiblement conducteurs de l'électricité, et dans lequel la bande conductrice (8) est en contact avec la partie de l'insert (43) débouchant sur la surface radialement interne de la bande de roulement (4,41,42).

5. Bandage pneumatique selon la revendication 3 dans lequel la bande conductrice est composée d'une première (81) et d'une deuxième bande (82) ayant chacune une extrémité en contact l'une avec l'autre, et dont l'autre extrémité de la première (81) est en contact avec la surface interne de la gomme de protection du bourrelet (5), et dont l'autre extrémité de la seconde (82) est en contact avec la surface radialement interne de la bande de roulement (4, 41, 42).

6. Bandage pneumatique selon la revendication 4 dans lequel la bande conductrice est composée d'une première (81) et d'une deuxième (81) ayant chacune une extrémités en contact l'une avec l'autre, et dont l'autre extrémité de la première (81) est en contact avec la surface interne de la gomme de protection du bourrelet (5), et dont l'autre extrémité de la seconde (82) est en contact avec la partie de l'insert (43) débouchant sur la surface radialement interne de la bande de roulement (4, 41, 42).

7. Bandage pneumatique selon la revendication 2 dans lequel la bande de roulement (4, 41, 42) comprend un moyen permettant d'assurer la conduction de l'électricité depuis la surface extérieure vers la surface intérieure, dans lequel les éléments constituants l'armature sommet (3, 31, 32, 33, 34) sont conducteurs de l'électricité et sont en contact avec lesdits moyens, et dans lequel la bande conductrice (8) est en contact avec la partie radialement interne de l'armature sommet.

8. Bandage pneumatique selon la revendication 2 dans lequel la bande de roulement est non conductrice de l'électricité et (4, 41) comprend un moyen (43) permettant d'assurer la conduction de l'électricité depuis la surface extérieure vers la surface intérieure, dans lequel ladite bande de roulement comprend une sous couche (42) disposée sur sa face interne et constituée d'un mélange conducteur de l'électricité, ladite sous-couche étant en contact avec ledit moyen (43), dans lequel les éléments constituants l'armature sommet (3, 31, 32, 33, 34) sont très faiblement conducteurs de l'électricité et dans lequel la bande conductrice (81) est en contact par une de ses extrémité avec la sous-couche (42).

9. Bandage pneumatique selon l'une quelconque des revendications précédentes dans lequel la bande conductrice est formée à partir d'une dissolution caoutchoutique projetée sur le trajet désiré.

10. Bandage selon la revendication 1 constitué d'une bande de roulement circonférentielle (4) portée par un ou plusieurs éléments autoporteurs flexibles (9) très faiblement conducteurs de l'électricité et situés radialement à l'intérieur de ladite bande de roulement, lesdits éléments étant reliés à la roue par des moyens (5) de manière à former un bandage non pneumatique.

## Claims

1. Tyre intended to be mounted on a wheel and to support a load, consisting of:
- a crown zone (S) with an outer surface intended to come into contact with the ground and an interior part of the crown zone,
- a bead area (B) designed to ensure contact between the wheel and the tyre, whose constituent (5) in contact with the wheel is electrically conductive,
- and a sidewall zone (F) designed to connect the crown zone (S) and the bead area (B),
**characterised in that**
- the constituents of the sidewall zone (F) are made with materials having very low electrical conductivity,
- the tyre comprises at least one conductive strip (8) of small thickness and width, made from an electrically conductive material of the nature of rubber and arranged radially along a path that extends from the said interior part of the crown zone (S), with which it is in contact, to the bead area (B), where it is in contact with the said constituent (5) designed to be in contact with the wheel.

2. Tyre according to Claim 1, in which the crown zone (S) comprises a circumferential crown reinforcement (3, 31, 32, 33, 34) consisting of at least one crown reinforcement ply, and a tread (4, 41, 42) arranged circumferentially around the crown reinforcement, whose outer surface is in contact with the ground, the said crown zone being attached to a carcass reinforcement ply (1) anchored at both of its ends to the bead area (B), the said bead area comprising a bead protection rubber (5) designed to ensure contact with the wheel and made from an electrically conductive material, so as to form a pneumatic tyre.

3. Pneumatic tyre according to Claim 2, in which the tread (4, 41, 42) is electrically conductive, in which the elements constituting the crown reinforcement (3, 31, 32, 33, 34) have very low electrical conductivity, and in which the conductive strip (8) is in contact with the radially interior surface of the tread.

4. Pneumatic tyre according to Claim 2, in which the tread (4, 41, 42) does not conduct electricity and comprises an insert (43) made from an electrically conductive mix and extending radially throughout the thickness of the tread (4), in which the elements constituting the crown reinforcement (3, 31, 32, 33, 34) have very low electrical conductivity, and in which the conductive strip (8) is in contact with the part of the insert (43) that meets the radially interior surface of the tread (4, 41, 42).

5. Pneumatic tyre according to Claim 3, in which the conductive strip (8) consists of a first strip (81) and a second strip (82) each having one end in contact with one another, the other end of the first strip (81) being in contact with the inner surface of the bead protection rubber (5) and the other end of the second strip (82) being in contact with the radially interior surface of the tread (4, 41,42).

6. Pneumatic tyre according to Claim 4, in which the conductive strip consists of a first strip (81) and a second strip (82) each having one end in contact with one another, the other end of the first strip (81) being in contact with the inner surface of the bead protection rubber (5) and the other end of the second strip (82) being in contact with the part of the insert (43) that meets the radially interior surface of the tread (4, 41, 42).

7. Pneumatic tyre according to Claim 2, in which the tread (4, 41, 42) comprises means that enable electricity to be conducted from the outer surface to the inner surface, in which the elements constituting the crown reinforcement (3, 31, 32, 33, 34) are electrically conductive and are in contact with the said means, and in which the conductive strip (8) is in contact with the radially inner part of the crown reinforcement.

8. Pneumatic tyre according to Claim 2, in which the tread (4, 41) does not conduct electricity and comprises means (43) that enable electricity to be conducted from the outer surface to the inner surface, in which the said tread comprises a underlying layer (42) arranged on its inner face and consisting of an electrically conductive mix, the said underlying layer being in contact with the said means (43), in which the elements constituting the crown reinforcement (3, 31, 32, 33, 34) have very low electrical conductivity, and in which the conductive strip (8) is in contact at one end with the underlying layer (42).

9. Pneumatic tyre according to any of the preceding claims, in which the conductive strip is formed from a rubber solution sprayed along the desired path.

10. Tyre according to Claim 1, consisting of a circumferential tread (4) supported by one or more flexible self-supporting elements (9) which have very low electrical conductivity and are located on the inside of the said tread, the said elements being connected to the wheel by means (5) such as to form a non-pneumatic tyre.

## Patentansprüche

1. Reifen, der dazu bestimmt ist, auf ein Rad montiert zu werden und eine Last zu tragen, bestehend aus
- einer Scheitelzone (S), die eine Außenfläche besitzt, die dazu bestimmt ist, mit dem Boden in Kontakt zu kommen, und die Mittel aufweist, um die Leitung der Elektrizität zwischen dem Boden und einem inneren Bereich der Scheitelzone zu gewährleisten,
- einer unteren Zone (B), die dazu bestimmt ist, den Kontakt zwischen dem Rad und dem Luftreifen gewährleisten und deren Bestandteil (5) in Kontakt mit dem Boden elektrizitätsleitend ist,
- und einer Flankenzone (F), die dazu bestimmt ist, die Verbindung zwischen der Scheitelzone (S) und der unteren Zone (B) zu gewährleisten,
**dadurch gekennzeichnet, dass**:
- die Bestandteile der Flankenzone (F) aus sehr schwach elektrizitätsleitenden Werkstoffen hergestellt werden,
- der Reifen mindestens ein leitendes Band (8) von geringer Dicke und geringer Breite aufweist, das aus einem elektrizitätsleitenden kautschukartigen Werkstoff hergestellt und radial auf einer Bahn angeordnet ist, die vom inneren Bereich der Scheitelzone (S), mit der es in Kontakt ist, bis zur unteren Zone (B) geht, wo es mit dem Bestandteil (5) in Kontakt ist, das dazu bestimmt ist, mit dem Rad in Kontakt zu sein.

2. Reifen nach Anspruch 1, bei dem die Scheitelzone (S) eine Umfangsscheitelbewehrung (3, 31, 32, 33, 34), die aus mindestens einer Scheitelverstärkungslage besteht, und eine Lauffläche (4, 41, 42) aufweist, die in Umfangsrichtung um die Scheitelbewehrung herum angeordnet ist, deren Außenfläche mit dem Boden in Kontakt ist, wobei die Scheitelzone fest mit einer Karkassenverstärkungslage (1) verbunden ist, die an ihren beiden Enden an der unteren Zone (B) verankert ist, wobei die untere Zone einen Schutzgummi für den Wulst (5) aufweist, der dazu bestimmt ist, den Kontakt mit dem Rad zu gewährleisten, und der aus einem elektrizitätsleitenden Werkstoff hergestellt ist, um einen Luftreifen zu bilden.

3. Luftreifen nach Anspruch 2, bei dem die Lauffläche (4, 41, 42) elektrizitätsleitend ist, bei dem die die Scheitelbewehrung (3, 31, 32, 33, 34) bildenden Elemente sehr schwach elektrizitätsleitend sind, und bei dem das leitende Band (8) mit der radial inneren Fläche der Lauffläche in Kontakt ist.

4. Luftreifen nach Anspruch 2, bei dem die Lauffläche (4, 41, 42) nicht elektrizitätsleitend ist und einen Einsatz (43) aufweist, der ausgehend von einer elektrizitätsleitenden Mischung hergestellt ist und sich radial durch die ganze Dicke der Lauffläche (4) erstreckt, bei dem die die Scheitelbewehrung (3, 31, 32, 33, 34) bildenden Elemente sehr schwach elektrizitätsleitend sind, und bei dem das leitende Band (8) mit dem Bereich des Einsatzes (43) in Kontakt ist, der an der radial inneren Fläche der der Lauffläche (4, 41, 42) mündet.

5. Luftreifen nach Anspruch 3, bei dem das leitende Band aus einem ersten (81) und aus einem zweiten Band (82) besteht, die je ein Ende in Kontakt mit dem anderen haben, und von denen das andere Ende des ersten Bands (81) mit der Innenfläche des Schutzgummi des Wulsts (5) in Kontakt ist und von denen das andere Ende des zweiten Bands (82) mit der radial inneren Fläche der Lauffläche (4, 41, 42) in Kontakt ist.

6. Luftreifen nach Anspruch 4, bei dem das leitende Band aus einem ersten (81) und einem zweiten Band (82) besteht, die je ein Ende in Kontakt mit dem anderen haben, und von denen das andere Ende des ersten Bands (81) mit der Innenfläche des Schutzgummis des Wulsts (5) in Kontakt ist, und von denen das andere Ende des zweiten Bands (82) mit dem Bereich des Einsatzes (43) in Kontakt ist, der an der radial inneren Fläche der Lauffläche (4, 41, 42) mündet.

7. Luftreifen nach Anspruch 2, bei dem die Lauffläche (4, 41, 42) ein Mittel aufweist, das es ermöglicht, das Leiten der Elektrizität von der Außenfläche zur Innenfläche zu gewährleisten, bei dem die die Scheitelbewehrung (3, 31, 32, 33, 34) bildenden Elemente elektrizitätsleitend sind und mit den Mitteln in Kontakt stehen, und bei dem das leitende Band (8) mit dem radial inneren Bereich der Scheitelbewehrung in Kontakt ist.

8. Luftreifen nach Anspruch 2, bei dem die Lauffläche (4, 41) nicht elektrizitätsleitend ist und ein Mittel (43) aufweist, das es erlaubt, das Leiten der Elektrizität von der Außenfläche zur Innenfläche zu gewährleisten, bei dem die Lauffläche eine Unterschicht (42) aufweist, die auf ihrer Innenseite angeordnet ist und aus einer elektrizitätsleitenden Mischung besteht, wobei die Unterschicht mit dem Mittel (43) in Kontakt ist, bei dem die die Scheitelbewehrung (3, 31, 32, 33, 34) bildenden Elemente sehr schwach elektrizitätsleitend sind und bei dem das leitende Band (81) mit einem seiner Enden mit der Unterschicht (42) in Kontakt ist.

9. Luftreifen nach einem der vorhergehenden Ansprüche, bei dem das leitende Band ausgehend von einer Gummilösung geformt wird, die auf die gewünschte Bahn projiziert wird.

10. Reifen nach Anspruch 1, der aus einer Umfangs-Lauffläche (4) besteht, die von einem oder mehreren flexiblen selbsttragenden Elementen (9) getragen wird, die sehr schwach elektrizitätsleitend sind und sich radial im Inneren der Lauffläche befinden, wobei die Elemente mit dem Rad über Mittel (5) verbunden sind, um einen luftlosen Reifen zu bilden.
